# EUROPEAN PATENT SPECIFICATION

(11) **EP 4 178 068 B1**
(45) Date of publication and mention of the grant of the patent: **17.04.2024**
(21) Application number: 22194252.7
(22) Date of filing: 07.09.2022
(51) Int. Cl.: H02J 7/00, H02J 1/08, H02J 1/10

(54) **CHARGING DEVICE**
LADEVORRICHTUNG
DISPOSITIF DE CHARGE

(30) Priority: 29.10.2021 CN 202111268864
(43) Date of publication of application: 10.05.2023
(73) Proprietor: Nanjing Chervon Industry Co., Ltd., Nanjing, Jiangsu 211106 (CN)
(72) Inventor: YANG, Dong, Nanjing, Jiangsu (CN); SONG, Henghui, Nanjing, Jiangsu (CN)
(74) Representative: Sun, Yiming

(56) References cited:
- EP-A1- 3 561 991
- EP-A1- 3 890 135
- US-A1- 2009 322 287
- US-A1- 2020 039 378

## Description

### TECHNICAL FIELD

Examples of the present application relate to the field of battery pack charging technology and, in particular, to a charging device in the context of machine tools.

### BACKGROUND

A user generally uses a charger to charge a battery pack.

In the related art, one charger is generally provided with only one charging interface and can charge only one battery pack, resulting in relatively low charging efficiency. Document EP3890135 A1 discloses a charging device with the technical features of the preamble of claim 1, for its use in battery energy storage systems (BESS) or solar energy systems and for electrical vehicle charging applications.

### SUMMARY

The present application provides a charging device as defined by independent claim 1. Advantageous embodiments are described in the dependent claims.

In some examples, a charging device includes a first power output module, a second power output module, a first charging interface, a second charging interface, and a controller. A first switch is coupled between the first power output module and the first charging interface. A second switch is coupled between the first power output module and the second charging interface. A third switch is coupled between the second power output module and the first charging interface. A fourth switch is coupled between the second power output module and the second charging interface. The controller is used for controlling the first switch, the second switch, the third switch and the fourth switch to be turned on or off.

The technical solutions provided by examples of the present application have the beneficial effects described below.

Two charging interfaces are provided in the charging device so that two battery packs can be charged, thereby improving the charging efficiency.

In addition, the first switch is coupled between the first power output module and the first charging interface, the second switch is coupled between the first power output module and the second charging interface, the third switch is coupled between the second power output module and the first charging interface, the fourth switch is coupled between the second power output module and the second charging interface, and the switches are controlled by the controller so that the charging device can control the switches to be turned on or off according to an actual application situation, thereby improving the charging efficiency and achieving high flexibility.

### BRIEF DESCRIPTION OF DRAWINGS

FIG. 1 is a schematic diagram of a charging device according to an example of the present application;
FIG. 2 is a schematic diagram of a charging device according to an example of the present application;
FIG. 3 is a schematic diagram of switches according to an example of the present application;
FIG. 4 is a schematic diagram of a state of switches according to the example of FIG. 1;
FIG. 5 is a schematic diagram of a state of switches according to the example of FIG. 3;
FIG. 6 is a schematic diagram of a state of switches according to the example of FIG. 3;
FIG. 7 is a schematic diagram of a state of switches according to the example of FIG. 1;
FIG. 8 is a schematic diagram of a state of switches according to the example of FIG. 3; and
FIG. 9 is a flowchart of a control method for a charging device according to an example of the present application. The control method is not covered by the scope of the appended claims but is included in this description for illustrative purposes.

### DETAILED DESCRIPTION

Examples of the present application are described below in detail in conjunction with drawings, from which the object, technical solutions and advantages of the present application are more apparent.

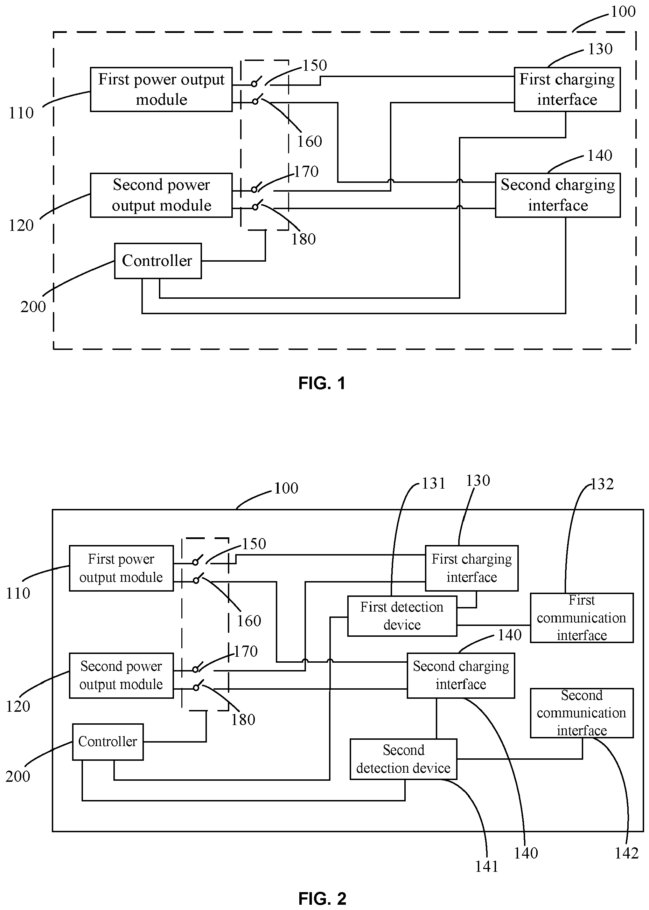

Referring to FIG. 1 which is a schematic diagram of a charging device according to an example of the present application, a charging device 100 includes a first power output module 110, a second power output module 120, a first charging interface 130, a second charging interface 140, and a controller 200.

The charging device 100 refers to a device for charging a battery pack of a power tool. The power tool may include, but is not limited to, a string trimmer, a blower, a pruner, a chainsaw, a lawn mower, an angle grinder, and an electric drill. Of course, the power tool may also include another type of tool, which is not limited in the examples of the present application. The battery pack includes a housing, the housing at least partially forms an outer surface of the battery pack and is used for accommodating at least a cell group, and the cell group includes multiple cells which are electrically connected to form the cell group. The housing is further formed with a plugging interface for connecting the battery pack to the power tool, and the battery pack can be connected to the power tool along a plugging direction. As a power source for the power tool, the battery pack may be used for supplying power to the power tool. Exemplarily, the charging device 100 may be a charger or an adapter, which is not limited in the examples of the present application.

A first switch 150 is coupled between the first power output module 110 and the first charging interface 130. The first power output module 110 refers to a module outputting power, and the first charging interface 130 refers to an interface for supplying power of the charging device 100 to the battery pack of the power tool. In the case where the first switch 150 is on, the first power output module 110 supplies power to the first charging interface 130; and in the case where the first switch 150 is off, the first power output module 110 does not supply power to the first charging interface 130.

A second switch 160 is coupled between the first power output module 110 and the second charging interface 140. The second charging interface 140 refers to an interface for supplying the power of the charging device 100 to the battery pack of the power tool. In the case where the second switch 160 is on, the first power output module 110 supplies power to the second charging interface 140; and in the case where the second switch 160 is off, the first power output module 110 does not supply power to the second charging interface 140.

In a possible example, the first switch 150 and the second switch 160 are single pole, single throw switches, that is, an end of the first switch 150 is coupled to the first power output module 110 and the other end of the first switch 150 is coupled to the first charging interface 130. An end of the second switch 160 is coupled to the first power output module 110 and the other end of the second switch 160 is coupled to the second charging interface 140.

In a possible example, the first switch and the second switch may be provided as one switch, where the switch may be used for making the first power output module supply power to the first charging interface or making the first power output module supply power to the second charging interface or making the first power output module not supply power to the first charging interface and the second charging interface. Exemplarily, the switch may be a single pole, triple throw switch, or the switch may be a two-way metal-oxide-semiconductor field-effect transistor (MOSFET) switch, or the switch may be a two-way single pole, double throw switch. The type of the switch is not limited in the examples of the present application, and the switch may be replaced with any type of switch capable of implementing the preceding functions.

A third switch 170 is coupled between the second power output module 120 and the first charging interface 130. The second power output module 120 refers to a module outputting power. The power outputted by the first power output module 110 may or may not be consistent with the power outputted by the second power output module 120, which may be set by a technician according to actual requirements. In the case where the third switch 170 is on, the second power output module 120 supplies power to the first charging interface 130; and in the case where the third switch 170 is off, the second power output module 120 does not supply power to the first charging interface 130.

A fourth switch 180 is coupled between the second power output module 120 and the second charging interface 140. In the case where the fourth switch 180 is on, the second power output module 120 supplies power to the second charging interface 140; and in the case where the fourth switch 180 is off, the second power output module 120 does not supply power to the second charging interface 140.

In a possible example, the third switch 170 and the fourth switch 180 are single pole, single throw switches, that is, an end of the third switch 170 is coupled to the second power output module 120 and the other end of the third switch 170 is coupled to the first charging interface 130; and an end of the fourth switch 180 is coupled to the second power output module 120 and the other end of the fourth switch 180 is coupled to the second charging interface 140.

In a possible example, the third switch and the fourth switch may be provided as one switch, where the switch may be used for making the second power output module supply power to the first charging interface or making the second power output module supply power to the second charging interface or making the second power output module not supply power to the first charging interface and the second charging interface. Exemplarily, the switch may be a single pole, triple throw switch, or the switch may be a two-way MOSFET switch, or the switch may be a two-way single pole, double throw switch. The type of the switch is not limited in the examples of the present application, and the switch may be replaced with any type of switch capable of implementing the preceding functions. As shown in FIG. 2, FIG. 2 is a schematic diagram of switches according to an example of the present application. In FIG. 2, the charging device 100 uses single pole, triple throw switches.

The controller 200 is used for controlling the first switch 150, the second switch 160, the third switch 170 and the fourth switch 180 to be turned on or off.

In a possible example, the controller 200 acquires a load state of the first charging interface 130 and a load state of the second charging interface 140 and controls the first switch 150, the second switch 160, the third switch 170 and the fourth switch 180 to be turned on or off, where the load state of the first charging interface 130 is used for indicating whether the first charging interface 130 is connected to a first battery pack. The load state of the first charging interface 130 is also used for indicating a state of charge of the first battery pack when the first charging interface 130 is connected to the first battery pack, and the load state of the second charging interface 140 is used for indicating whether the second charging interface 140 is connected to a second battery pack and a state of charge of the second battery pack. The controller 200 controls, according to the load state of the first charging interface 130 and the load state of the second charging interface 140, the first switch, the second switch, the third switch and the fourth switch to be turned on or off so that the power supply output of the charging device 100 to the battery pack is more in line with the charging requirements of the battery pack, thereby improving the charging efficiency of the charging device 100.

In the examples of the present application, the charging device 100 includes the first charging interface 130 and the second charging interface 140, the first switch 150 is coupled between the first power output module 110 and the first charging interface 130, the second switch 160 is coupled between the first power output module 110 and the second charging interface 140, the third switch 170 is coupled between the second power output module 120 and the first charging interface 130, the fourth switch 180 is coupled between the second power output module 120 and the second charging interface 140, and the switches are controlled by the controller 200. In this manner, the output capacity and parallel function of the charging device 100 are increased so that the battery pack can be charged fast at high power.

To sum up, in the technical solutions provided in the examples of the present application, two charging interfaces are provided in the charging device 100 so that two battery packs can be charged at the same time, thereby improving the charging efficiency.

In addition, the first switch 150 is coupled between the first power output module 110 and the first charging interface 130, the second switch 160 is coupled between the first power output module 110 and the second charging interface 140, the third switch 170 is coupled between the second power output module 120 and the first charging interface 130, the fourth switch 180 is coupled between the second power output module 120 and the second charging interface 140, and the switches are controlled by the controller 200 so that the charging device 100 can control the switches to be turned on or off according to an actual application situation, thereby improving the charging efficiency and achieving high flexibility.

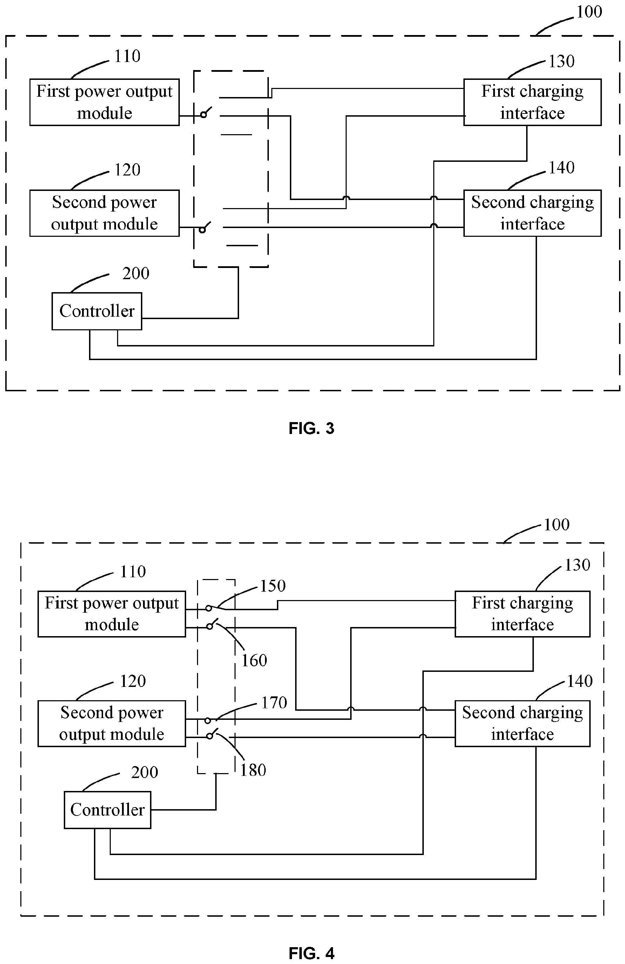

In an illustrative example, as shown in FIG. 3, the charging device 100 further includes a first detection device 131 and a second detection device 141. The first detection device 131 is used for determining the load state of the first charging interface 130, where the load state of the first charging interface 130 is used for indicating whether the first charging interface 130 is connected to the first battery pack and the state of charge of the first battery pack. The state of charge of the first battery pack is used for indicating the current charge of the first battery pack.

The first detection device 131 is coupled to the first charging interface 130. The first detection device 131 may determine whether the first charging interface 130 is connected to the first battery pack by detecting whether a voltage exists across the first charging interface 130. In a possible example, to more accurately detect whether the first charging interface 130 is connected to the first battery pack, and the first detection device 131 is also coupled to a first communication interface 132 on the charging device 100. The first detection device 131 determines a voltage across the first charging interface and a voltage across the first communication interface 132 at the same time and determines. Based on the voltage across the first charging interface 130 and the voltage across the first communication interface 132, determine whether the first charging interface 130 is connected to the first battery pack. In the case where the first detection device 131 determines that a voltage exists across the first charging interface 130 and a voltage exists across the first communication interface 132, the first detection device 131 determines that the first charging interface 130 is connected to the first battery pack. In the case where the first detection device 131 determines that no voltage exists across the first charging interface 130 and no voltage exists across the first communication interface 132, the first detection device 131 determines that the first charging interface 130 is not connected to the first battery pack. In the case where the first detection device 131 determines that a voltage exists across the first charging interface 130 and no voltage exists across the first communication interface 132, the first detection device 131 determines that the first charging interface 130 is not connected to the first battery pack. In the case where the first detection device 131 determines that no voltage exists across the first charging interface 130 and a voltage exists across the first communication interface 132, the first detection device 131 determines that the first charging interface 130 is not connected to the first battery pack. Exemplarily, the first charging interface 130 includes a positive interface and a negative interface, and the first battery pack includes a positive terminal and a negative terminal. When the positive interface of the first charging interface 130 is coupled to the positive terminal of the first battery pack and the negative interface of the first charging interface 130 is coupled to the negative terminal of the first battery pack, the first charging interface 130 may supply power to the first battery pack.

The first communication interface 132 is used for the charging device 100 to communicate with the first battery pack. The first battery pack further includes a communication port. When the first communication interface 132 of the charging device 100 is coupled to the communication port of the first battery pack, the first battery pack may communicate with the charging device 100.

In a possible example, the first battery pack sends its state of charge to the charging device 100 through the communication port. In a example, the charging device 100 automatically detects the charge of the first battery pack to obtain the state of charge of the first battery pack.

The second detection device 141 is used for determining the load state of the second charging interface 140, where the load state of the second charging interface 140 is used for indicating whether the second charging interface 140 is connected to the second battery pack and the state of charge of the second battery pack. The state of charge of the second battery pack is used for indicating the current charge of the second battery pack.

The second detection device 141 is coupled to the second charging interface 140. The second detection device 141 may determine whether the second charging interface 140 is connected to the second battery pack by detecting whether a voltage exists across the second charging interface 140. In a possible example, to more accurately detect whether the second charging interface 140 is connected to the second battery pack, the second detection device 141 is also coupled to a second communication interface 142 on the charging device 100, and the second detection device 141 determines a voltage across the second charging interface 140 and a voltage across the second communication interface 142 at the same time and determines, based on the voltage across the second charging interface 140 and the voltage across the second communication interface 142, whether the second charging interface 140 is connected to the second battery pack. In the case where the second detection device 141 determines that a voltage exists across the second charging interface 140 and a voltage exists across the second communication interface 142, the second detection device 141 determines that the second charging interface 140 is connected to the second battery pack. In the case where the second detection device 141 determines that no voltage exists across the second charging interface 140 and no voltage exists across the second communication interface 142, the second detection device 141 determines that the second charging interface 140 is not connected to the second battery pack. In the case where the second detection device 141 determines that a voltage exists across the second charging interface 140 and no voltage exists across the second communication interface 142, the second detection device 141 determines that the second charging interface 140 is not connected to the second battery pack. In the case where the second detection device 141 determines that no voltage exists across the second charging interface and a voltage exists across the second communication interface 142, the second detection device 141 determines that the second charging interface 140 is not connected to the second battery pack. Exemplarily, the second charging interface 140 includes a positive interface and a negative interface, and the second battery pack includes a positive terminal and a negative terminal. When the positive interface of the second charging interface 140 is coupled to the positive terminal of the second battery pack and the negative interface of the second charging interface 140 is coupled to the negative terminal of the second battery pack, the second charging interface may supply power to the second battery pack.

The second communication interface 142 is used for the charging device 100 to communicate with the second battery pack. The second battery pack further includes a communication port. When the second communication interface 142 of the charging device 100 is coupled to the communication port of the second battery pack, the second battery pack may communicate with the charging device 100.

In a possible example, the second battery pack sends its state of charge to the charging device 100 through the communication port; or the charging device 100 automatically detects the charge of the second battery pack to obtain the state of charge of the second battery pack.

The controller 200 is configured to control the first switch 150, the second switch 160, the third switch 170 and the fourth switch 180 to be turned on or off based on the load state of the first charging interface 130 and the load state of the second charging interface 140.

The controller 200 controls the first switch 150, the second switch 160, the third switch 170 and the fourth switch 180 to be turned on or off according to the load state of the first charging interface 130 and the load state of the second charging interface 140, so that the power supply output of the charging device 100 to the battery pack is more in line with the charging requirements of the battery pack, thereby improving the charging efficiency of the charging device 100.

In a possible example, the first detection device 131 is used for determining that the load state of the first charging interface 130 is that the first charging interface 130 is connected to the first battery pack and the first battery pack is not fully charged. The second detection device 141 is used for determining that the load state of the second charging interface 140 is that the second charging interface 140 is not connected to the second battery pack. The controller 200 is used for turning on the first switch 150 and the third switch 170 and turning off the second switch 160 and the fourth switch 180.

In this case, the charging device 100 supplies power to the first battery pack through the first power output module 110 and the second power output module 120 at the same time, shortening the time for charging the first battery pack and improving the charging efficiency. At the same time, the second switch 160 and the fourth switch 180 are turned off so that the first power output module 110 and/or the second power output module 120 do not supply power to the second charging interface, thereby avoiding energy waste.

As shown in FIG. 4, FIG. 4 is a schematic diagram of states of switches according to an example of the present application. The second charging interface 140 is not connected to the second battery pack, and the first power output module 110 and the second power output module 120 supply power to the first battery pack.

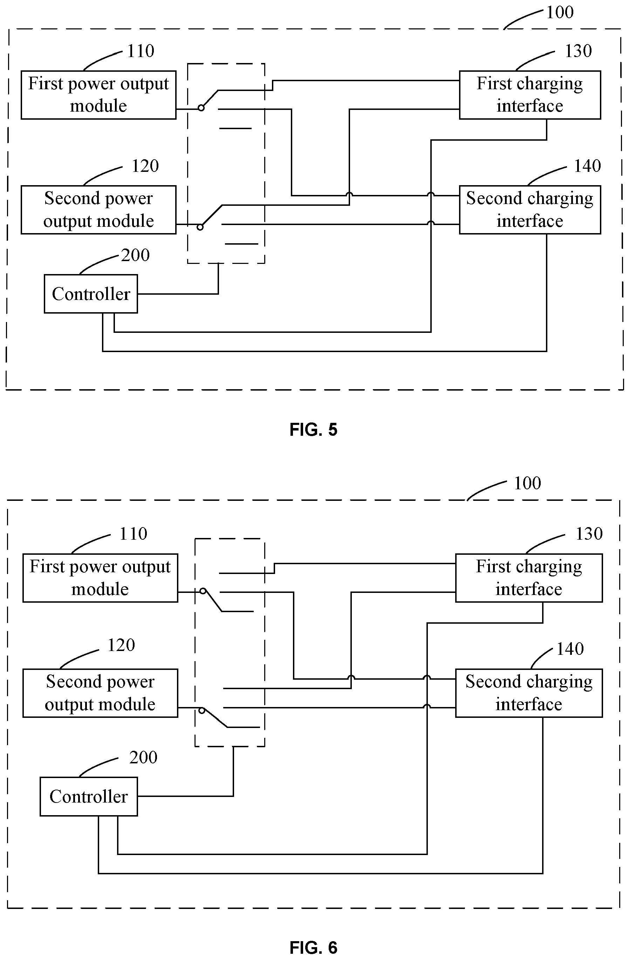

Exemplarily, as shown in FIG. 5, using an example in which the first switch and the second switch are implemented as a first single pole, triple throw switch and the third switch and the fourth switch are implemented as a second single pole, triple throw switch, the first single pole, triple throw switch and the second single pole, triple throw switch are set to be in the states shown in FIG. 4 so that the first power output module 110 and the second power output module 120 charge the first battery pack at the same time.

It is to be noted that, in the example of the present application, only an example in which the first charging interface 130 is connected to the first battery pack and the second charging interface 140 is not connected to the second battery pack is used for description, and a charging control logic in the case where the first charging interface 130 is not connected to the first battery pack and the second charging interface 140 is connected to the second battery pack is similar to that in the preceding case. That is, in the case where the first charging interface 130 is not connected to the first battery pack, the second charging interface 140 is connected to the second battery pack, and the second battery pack is not fully charged, the controller 200 turns on the second switch 160 and the fourth switch 180 and turns off the first switch 150 and the third switch 170.

In a possible example, the first detection device 131 is used for determining that the load state of the first charging interface 130 is that the first charging interface 130 is connected to the first battery pack and the first battery pack is not fully charged. The second detection device 141 is used for determining that the load state of the second charging interface 140 is that the second charging interface 140 is connected to the second battery pack and the second battery pack is fully charged. The controller 200 is used for turning on the first switch 150 and the third switch 170 and turning off the second switch 160 and the fourth switch 180.

In this case, the charging device 100 supplies power to the first battery pack through the first power output module 110 and the second power output module 120 at the same time, shortening the time for charging the first battery pack and improving the charging efficiency. At the same time, in the case where the second battery pack is fully charged, the second switch 160 and the fourth switch 180 are turned off so that the first power output module 110 and/or the second power output module 120 do not supply power to the second charging interface, thereby avoiding energy waste.

It is to be noted that, in the example of the present application, only an example in which the first battery pack is not fully charged and the second battery pack is fully charged is used for description, and a charging control logic in the case where the first battery pack is fully charged and the second battery pack is not fully charged is similar to that in the preceding case. That is, in the case where the first charging interface 130 is connected to the first battery pack, the first battery pack is fully charged, the second charging interface is connected to the second battery pack, and the second battery pack is not fully charged, the controller 200 turns on the second switch 160 and the fourth switch 180 and turns off the first switch 150 and the third switch 170.

When no battery pack exists or when a battery pack exists but the battery pack is fully charged, the corresponding power output module is disconnected from the charging interface, and the idle power output module is connected in parallel to charge the battery pack that needs to be charged.

In a possible example, the first detection device 131 is used for determining that the load state of the first charging interface 130 is that the first charging interface 130 is not connected to the first battery pack. The second detection device 141 is used for determining that the load state of the second charging interface 140 is that the second charging interface 140 is not connected to the second battery pack. The controller 200 is used for turning off the first switch, the second switch, the third switch and the fourth switch.

In the case where neither the first charging interface 130 nor the second charging interface 140 is connected to the battery pack, the charging device 100 turns off the first switch 150, the second switch, the third switch 170 and the fourth switch 180 so that the first power output module 110 and the second power output module 120 do not supply power to the outside, thereby avoiding energy waste.

Exemplarily, as shown in FIG. 6, using an example in which the first switch and the second switch are implemented as a first single pole, triple throw switch and the third switch and the fourth switch are implemented as a second single pole, triple throw switch, the first single pole, triple throw switch and the second single pole, triple throw switch are set to be in the null connection states shown in FIG. 6 so that the first power output module 110 and the second power output module 120 do not supply power to the charging interfaces.

In a possible example, the first detection device 131 is used for determining that the load state of the first charging interface 130 is that the first charging interface 130 is connected to the first battery pack and the first battery pack is fully charged. The second detection device 141 is used for determining that the load state of the second charging interface 140 is that the second charging interface 140 is connected to the second battery pack and the second battery pack is fully charged. The controller 200 is used for turning off the first switch 150, the second switch 160, the third switch 170 and the fourth switch 180.

In the case where the first charging interface 130 is connected to the first battery pack, the first battery pack is fully charged, the second charging interface 140 is connected to the second battery pack, and the second battery pack is fully charged, the charging device 100 turns off the first switch 150, the second switch 160, the third switch 170 and the fourth switch 180 so that the first power output module 110 and the second power output module 120 do not supply power to the outside, thereby avoiding energy waste.

In a possible example, the first detection device 131 is used for determining that the load state of the first charging interface 130 is that the first charging interface 130 is connected to the first battery pack and the first battery pack is not fully charged. The second detection device 141 is used for determining that the load state of the second charging interface 140 is that the second charging interface 140 is connected to the second battery pack and the second battery pack is not fully charged. The controller 200 is used for turning on the first switch 150 and the fourth 180 switch and turning off the second switch 160 and the third switch 170.

In the case where neither the first battery pack nor the second battery pack is fully charged, the first power output module 110 supplies power to the first battery pack and the second power output module 120 supplies power to the second battery pack, thereby improving the charging efficiency.

When both the first charging interface 130 and the second charging interface 140 are connected to the battery packs and neither of the battery packs is fully charged, each of the first power output module 110 and the second power output module 120 independently charges a respective battery pack.

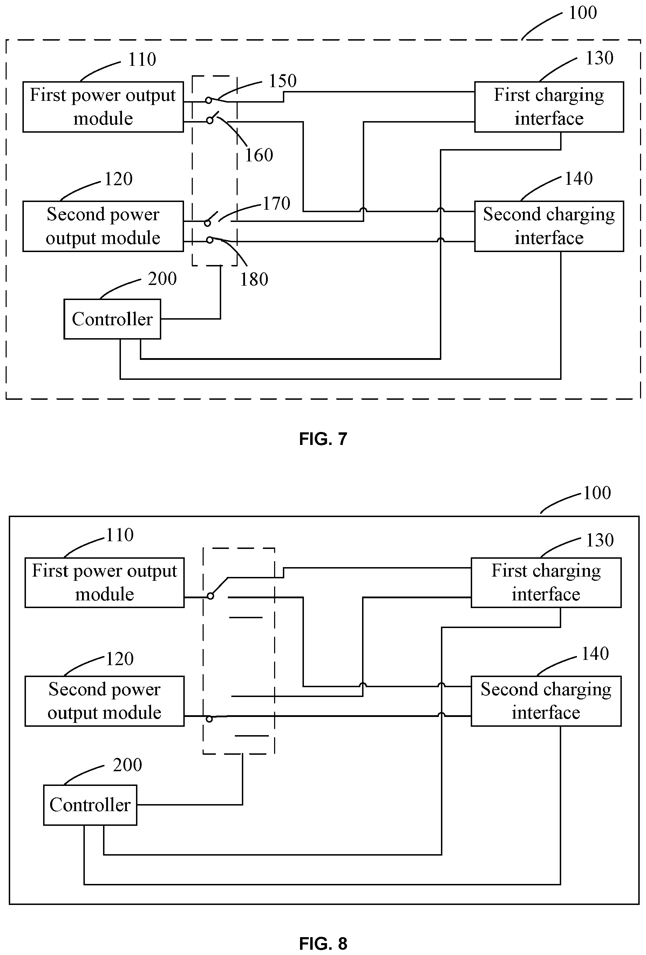

As shown in FIG. 7, FIG. 7 is a schematic diagram of states of switches according to another example of the present application. When both the first charging interface 130 and the second charging interface 140 are connected to the battery packs and neither of the battery packs is fully charged, each of the first power output module 110 and the second power output module 120 independently supplies power to a respective charging interface.

Exemplarily, as shown in FIG. 8, using an example in which the first switch and the second switch are implemented as a first single pole, triple throw switch and the third switch and the fourth switch are implemented as a second single pole, triple throw switch, the first single pole, triple throw switch and the second single pole, triple throw switch are set to be in the states shown in FIG. 8 so that each of the first power output module 110 and the second power output module 120 independently supplies power to its respective charge interface.

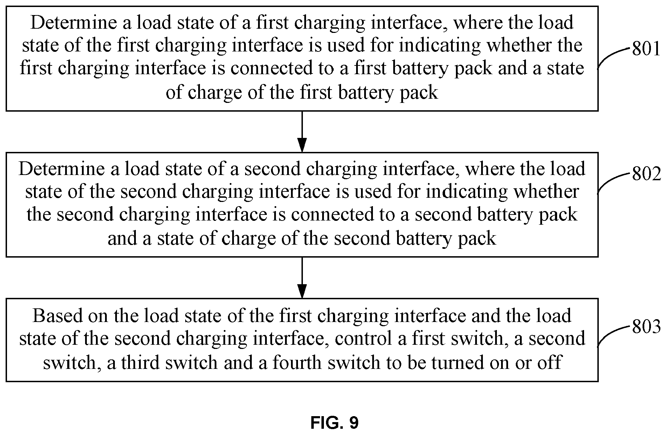

Referring to FIG. 9, FIG. 9 is a flowchart of a control method for a charging device according to an example of the present application. The control method is not covered by the scope of the appended claims but is included in this description for illustrative purposes. The charging device includes a first power output module, a second power output module, a first charging interface, a second charging interface, and a controller. A first switch is coupled between the first power output module and the first charging interface, a second switch is coupled between the first power output module and the second charging interface, a third switch is coupled between the second power output module and the first charging interface, and a fourth switch is coupled between the second power output module and the second charging interface. The method may include the steps described below.

In step 801, a load state of the first charging interface is determined, where the load state of the first charging interface is used for indicating whether the first charging interface is connected to a first battery pack and a state of charge of the first battery pack.

In step 802, a load state of the second charging interface is determined, where the load state of the second charging interface is used for indicating whether the second charging interface is connected to a second battery pack and a state of charge of the second battery pack.

In step 803, based on the load state of the first charging interface and the load state of the second charging interface, the first switch, the second switch, the third switch and the fourth switch are controlled to be turned on or off.

Step 801 and step 802 may be performed simultaneously; or step 801 may be performed before step 802 is performed; or step 802 may be performed before step 801 is performed, which is not limited in the examples of the present application.

In an illustrative example, step 801 includes determining that the load state of the first charging interface is that the first charging interface is connected to the first battery pack and the first battery pack is not fully charged.

Step 802 includes determining that the load state of the second charging interface is that the second charging interface is not connected to the second battery pack.

Step 803 includes turning on the first switch and the third switch and turning off the second switch and the fourth switch.

In an illustrative example, step 801 includes determining that the load state of the first charging interface is that the first charging interface is connected to the first battery pack and the first battery pack is not fully charged.

Step 802 includes determining that the load state of the second charging interface is that the second charging interface is connected to the second battery pack and the second battery pack is fully charged.

Step 803 includes turning on the first switch and the third switch and turning off the second switch and the fourth switch.

In an illustrative example, step 801 includes determining that the load state of the first charging interface is that the first charging interface is not connected to the first battery pack.

Step 802 includes determining that the load state of the second charging interface is that the second charging interface is not connected to the second battery pack.

Step 803 includes turning off the first switch, the second switch, the third switch and the fourth switch.

In an illustrative example, step 801 includes determining that the load state of the first charging interface is that the first charging interface is connected to the first battery pack and the first battery pack is fully charged.

Step 802 includes determining that the load state of the second charging interface is that the second charging interface is connected to the second battery pack and the second battery pack is fully charged.

Step 803 includes turning off the first switch, the second switch, the third switch and the fourth switch.

In an illustrative example, step 801 includes determining that the load state of the first charging interface is that the first charging interface is connected to the first battery pack and the first battery pack is not fully charged.

Step 802 includes determining that the load state of the second charging interface is that the second charging interface is connected to the second battery pack and the second battery pack is not fully charged.

Step 803 includes turning on the first switch and the fourth switch and turning off the second switch and the third switch.

To sum up, in the technical solutions provided in the examples of the present application, two charging interfaces are provided in the charging device so that two battery packs can be charged at the same time, thereby improving charging efficiency.

In addition, the first switch is coupled between the first power output module and the first charging interface, the second switch is coupled between the first power output module and the second charging interface, the third switch is coupled between the second power output module and the first charging interface, the fourth switch is coupled between the second power output module and the second charging interface, and the switches are controlled by the controller based on the load states of the charging interfaces so that the charging device can control the switches to be turned on or off according to an actual application situation, thereby improving the charging efficiency and achieving high flexibility.

It is to be noted that the method example and the product example provided in the preceding examples belong to the same concept, and for the specific implementation process of the method example, see the product example, and details are not repeated here.

It is to be noted that, in the examples of the present application, only an example in which the charging device includes two charging interfaces is used for description. In other possible examples, the charging device may include three or more charging interfaces, which is not limited in the examples of the present application.

It is to be understood that "multiple" mentioned herein means two or more. "And/or" describes an association relationship between associated objects and indicates that three relationships may exist. For example, A and/or B may indicate the following three cases: A exists alone; A and B exist at the same time; and B exists alone. The character "/" generally indicates an "or" relationship between associated objects before and after the character. In addition, the numbering of the steps described herein only exemplarily shows a possible execution sequence of the steps. In some other examples, the preceding steps may not be executed according to the numbering, for example, two steps with different numbers are performed at the same time, or two steps with different numbers are performed in an order reverse to the order shown in the figure, which is not limited in the examples of the present application.

Those of ordinary skill in the art can understand that all or part of the steps for implementing the preceding examples may be performed by hardware or may be performed by relevant hardware instructed by a program, where the program may be stored in a computer-readable storage medium. The preceding storage medium may be a read-only memory, a magnetic disk, an optical disk or the like. Since the control method is not covered by the scope of the appended claims, these programs implementations are also not covered by the scope of the onvention. Both (method, program) are included in this description for illustrative purposes.

The above are only exemplary examples of the present application and not intended to limit the present application. The scope of the invention is only defined by the appended claims.

## Claims

1. A charging device (100), comprising:
a first charging interface (130) connectable to a first battery pack for charging the first battery pack;
a second charging interface (140) connectable to a second battery pack for charging the second battery pack;
a first power output module (110) connected to the first charging interface to charge the first battery pack;
a second power output module (120) connected to the second charging interface to charge the second battery pack; and
a controller (200) connected to at least the first charging interface and the second charging interface; wherein the controller is configured to:
when the first battery pack is fully charged or not connected to the first charging interface, control the first power output module and the second power output module to be electrically connected to the second charging interface to charge the second battery pack;
**characterized in that**
the first battery pack is a battery pack of a power tool
and that the second battery pack is a battery pack of a power tool.

2. The charging device of claim 1, wherein a first switch (150) is coupled between the first power output module and the first charging interface, a second switch (160) is coupled between the first power output module and the second charging interface, a third switch (170) is coupled between the second power output module and the first charging interface, a fourth switch (180) is coupled between the second power output module and the second charging interface, and the controller is configured to control the first switch, the second switch, the third switch and the fourth switch to be turned on or off.

3. The charging device of claim 1, further comprising a first detection device (131) for determining a load state of the first charging interface and a second detection device (141) for determining a load state of the second charging interface.

4. The charging device of claim 3, wherein the load state of the first charging interface is used for indicating whether the first charging interface is connected to the first battery pack and a state of charge of the first battery pack, and the load state of the second charging interface is used for indicating whether the second charging interface is connected to the second battery pack and a state of charge of the second battery pack.

5. The charging device of claim 4, wherein a first switch (150) is coupled between the first power output module and the first charging interface, a second switch (160) is coupled between the first power output module and the second charging interface, a third switch (170) is coupled between the second power output module and the first charging interface, a fourth switch (180) is coupled between the second power output module and the second charging interface, and the controller is configured to the first switch, the second switch, the third switch and the fourth switch to be turned on or off based on the load state of the first charging interface and the load state of the second charging interface.

6. The charging device of claim 5, wherein the controller is configured to turn off the first switch and the third switch when the load state of the first charging interface determined by the first detection device is that the first charging interface is not connected to the first battery pack or the first battery pack is fully charged.

7. The charging device of claim 5, wherein the controller is configured to turn off the second switch and the fourth switch when the load state of the second charging interface determined by the second detection device is that the second charging interface is not connected to the second battery pack or the second battery pack is fully charged.

8. The charging device of claim 5, wherein when the load state of the first charging interface is that the first charging interface is connected to the first battery pack and the first battery pack is not fully charged, and the load state of the second charging interface is that the second charging interface is not connected to the second battery pack, the controller is configured to control the first switch and the third switch to be turned on and control the second switch and the fourth switch to be turned off.

9. The charging device of claim 5, wherein when the load state of the first charging interface is that the first charging interface is connected to the first battery pack and the first battery pack is not fully charged, and the load state of the second charging interface is that the second charging interface is connected to the second battery pack and the second battery pack is fully charged, the controller is configured to control the first switch and the third switch to be turned on and control the second switch and the fourth switch to be turned off.

10. The charging device of claim 5, wherein when the load state of the first charging interface is that the first charging interface is not connected to the first battery pack, and the load state of the second charging interface is that the second charging interface is not connected to the second battery pack, the controller is configured to control the first switch, the second switch, the third switch and the fourth switch to be turned off.

11. The charging device of claim 5, wherein when the load state of the first charging interface is that the first charging interface is connected to the first battery pack and the first battery pack is fully charged, and the load state of the second charging interface is that the second charging interface is connected to the second battery pack and the second battery pack is fully charged, the controller is configured to control the first switch, the second switch, the third switch and the fourth switch to be turned off.

12. The charging device of claim 5, wherein when the load state of the first charging interface is that the first charging interface is connected to the first battery pack and the first battery pack is not fully charged, and the load state of the second charging interface is that the second charging interface is connected to the second battery pack and the second battery pack is not fully charged, the controller is configured to control the first switch and the fourth switch to be turned on and control the second switch and the third switch to be turned off.

13. The charging device of claim 5, wherein when the load state of the first charging interface is that the first charging interface is connected to the first battery pack and the first battery pack is not fully charged, and the load state of the second charging interface is that the second charging interface is connected to the second battery pack and the second battery pack is not fully charged, the controller is configured to control the second switch and the third switch to be turned on and control the first switch and the fourth switch to be turned off.

14. The charging device of claim 3, wherein the load state comprises at least the state of charge of the first battery pack or the second battery pack.

15. The charging device of claim 14, further comprising a first communication interface (132) and a second communication interface (142); wherein the first communication interface is connected to the first battery pack to acquire at least the state of charge of the first battery pack, and the second communication interface is connected to the second battery pack to acquire at least the state of charge of the second battery pack.

## Patentansprüche

1. Ladegerät (100), umfassend:
eine erste Ladeschnittstelle (130), die mit einem ersten Batteriepack zuma Laden des ersten Batteriepacks verbindbar ist;
eine zweite Ladeschnittstelle (140), die mit einem zweiten Batteriepack zum Laden des zweiten Batteriepacks verbindbar ist;
ein erstes Leistungsausgabemodul (110), das mit der ersten Ladeschnittstelle verbunden ist, um das erste Batteriepack zu laden;
ein zweites Leistungsausgabemodul (120), das mit der zweiten Ladeschnittstelle verbunden ist, um das zweite Batteriepack zu laden; und
eine Steuereinheit (200), die mit wenigstens der ersten Ladeschnittstelle und der zweiten Ladeschnittstelle verbunden ist; wobei die Steuereinheit dafür ausgelegt ist:
wenn das erste Batteriepack vollständig geladen oder nicht mit der ersten Ladeschnittstelle verbunden ist, das erste Leistungsausgabemodul und das zweite Leistungsausgabemodul so zu steuern, dass sie mit der zweiten Ladeschnittstelle verbunden werden, um das zweite Batteriepack zu laden;
**dadurch gekennzeichnet, dass**
das erste Batteriepack ein Batteriepack eines Elektrowerkzeugs ist
und dass das zweite Batteriepack ein Batteriepack eines Elektrowerkzeugs ist.

2. Ladegerät nach Anspruch 1, wobei ein erster Schalter (150) zwischen das erste Leistungsausgabemodul und die erste Ladeschnittstelle geschaltet ist, ein zweiter Schalter (160) zwischen das erste Leistungsausgabemodul und die zweite Ladeschnittstelle geschaltet ist, ein dritter Schalter (170) zwischen das zweite Leistungsausgabemodul und die erste Ladeschnittstelle geschaltet ist, ein vierter Schalter (180) zwischen das zweite Leistungsausgabemodul und die zweite Ladeschnittstelle geschaltet ist und die Steuereinheit dafür ausgelegt ist, das Ein- oder Ausschalten des ersten Schalters, des zweiten Schalters, des dritten Schalters und des vierten Schalters zu steuern.

3. Ladegerät nach Anspruch 1, welches ferner eine erste Detektionsvorrichtung (131) zum Bestimmen eines Lastzustands der ersten Ladeschnittstelle und eine zweite Detektionsvorrichtung (141) zum Bestimmen eines Lastzustands der zweiten Ladeschnittstelle umfasst.

4. Ladegerät nach Anspruch 3, wobei der Lastzustand der ersten Ladeschnittstelle verwendet wird, um anzuzeigen, ob die erste Ladeschnittstelle mit dem ersten Batteriepack verbunden ist, und einen Ladezustand des ersten Batteriepacks anzuzeigen, und der Lastzustand der zweiten Ladeschnittstelle verwendet wird, um anzuzeigen, ob die zweite Ladeschnittstelle mit dem zweiten Batteriepack verbunden ist, und einen Ladezustand des zweiten Batteriepacks anzuzeigen.

5. Ladegerät nach Anspruch 4, wobei ein erster Schalter (150) zwischen das erste Leistungsausgabemodul und die erste Ladeschnittstelle geschaltet ist, ein zweiter Schalter (160) zwischen das erste Leistungsausgabemodul und die zweite Ladeschnittstelle geschaltet ist, ein dritter Schalter (170) zwischen das zweite Leistungsausgabemodul und die erste Ladeschnittstelle geschaltet ist, ein vierter Schalter (180) zwischen das zweite Leistungsausgabemodul und die zweite Ladeschnittstelle geschaltet ist und die Steuereinheit dafür ausgelegt ist, das Ein- oder Ausschalten des ersten Schalters, des zweiten Schalters, des dritten Schalters und des vierten Schalters basierend auf dem Lastzustand der ersten Ladeschnittstelle und dem Lastzustand der zweiten Ladeschnittstelle zu steuern.

6. Ladegerät nach Anspruch 5, wobei die Steuereinheit dafür ausgelegt ist, den ersten Schalter und den dritten Schalter auszuschalten, wenn der von der ersten Detektionsvorrichtung bestimmte Lastzustand der ersten Ladeschnittstelle darin besteht, dass die erste Ladeschnittstelle nicht mit dem ersten Batteriepack verbunden ist oder das erste Batteriepack vollständig geladen ist.

7. Ladegerät nach Anspruch 5, wobei die Steuereinheit dafür ausgelegt ist, den zweiten Schalter und den vierten Schalter auszuschalten, wenn der von der zweiten Detektionsvorrichtung bestimmte Lastzustand der zweiten Ladeschnittstelle darin besteht, dass die zweite Ladeschnittstelle nicht mit dem zweiten Batteriepack verbunden ist oder das zweite Batteriepack vollständig geladen ist.

8. Ladegerät nach Anspruch 5, wobei, wenn der Lastzustand der ersten Ladeschnittstelle darin besteht, dass die erste Ladeschnittstelle mit dem ersten Batteriepack verbunden ist und das erste Batteriepack nicht vollständig geladen ist, und der Lastzustand der zweiten Ladeschnittstelle darin besteht, dass die zweite Ladeschnittstelle nicht mit dem zweiten Batteriepack verbunden ist, die Steuereinheit dafür ausgelegt ist, den ersten Schalter und den dritten Schalter so zu steuern, dass sie eingeschaltet sind, und den zweiten Schalter und den vierten Schalter so zu steuern, dass sie ausgeschaltet sind.

9. Ladegerät nach Anspruch 5, wobei, wenn der Lastzustand der ersten Ladeschnittstelle darin besteht, dass die erste Ladeschnittstelle mit dem ersten Batteriepack verbunden ist und das erste Batteriepack nicht vollständig geladen ist, und der Lastzustand der zweiten Ladeschnittstelle darin besteht, dass die zweite Ladeschnittstelle mit dem zweiten Batteriepack verbunden ist und das zweite Batteriepack vollständig geladen ist, die Steuereinheit dafür ausgelegt ist, den ersten Schalter und den dritten Schalter so zu steuern, dass sie eingeschaltet sind, und den zweiten Schalter und den vierten Schalter so zu steuern, dass sie ausgeschaltet sind.

10. Ladegerät nach Anspruch 5, wobei, wenn der Lastzustand der ersten Ladeschnittstelle darin besteht, dass die erste Ladeschnittstelle nicht mit dem ersten Batteriepack verbunden ist, und der Lastzustand der zweiten Ladeschnittstelle darin besteht, dass die zweite Ladeschnittstelle nicht mit dem zweiten Batteriepack verbunden ist, die Steuereinheit dafür ausgelegt ist, den ersten Schalter, den zweiten Schalter, den dritten Schalter und den vierten Schalter so zu steuern, dass sie ausgeschaltet sind.

11. Ladegerät nach Anspruch 5, wobei, wenn der Lastzustand der ersten Ladeschnittstelle darin besteht, dass die erste Ladeschnittstelle mit dem ersten Batteriepack verbunden ist und das erste Batteriepack vollständig geladen ist, und der Lastzustand der zweiten Ladeschnittstelle darin besteht, dass die zweite Ladeschnittstelle mit dem zweiten Batteriepack verbunden ist und das zweite Batteriepack vollständig geladen ist, die Steuereinheit dafür ausgelegt ist, den ersten Schalter, den zweiten Schalter, den dritten Schalter und den vierten Schalter so zu steuern, dass sie ausgeschaltet sind.

12. Ladegerät nach Anspruch 5, wobei, wenn der Lastzustand der ersten Ladeschnittstelle darin besteht, dass die erste Ladeschnittstelle mit dem ersten Batteriepack verbunden ist und das erste Batteriepack nicht vollständig geladen ist, und der Lastzustand der zweiten Ladeschnittstelle darin besteht, dass die zweite Ladeschnittstelle mit dem zweiten Batteriepack verbunden ist und das zweite Batteriepack nicht vollständig geladen ist, die Steuereinheit dafür ausgelegt ist, den ersten Schalter und den vierten Schalter so zu steuern, dass sie eingeschaltet sind, und den zweiten Schalter und den dritten Schalter so zu steuern, dass sie ausgeschaltet sind.

13. Ladegerät nach Anspruch 5, wobei, wenn der Lastzustand der ersten Ladeschnittstelle darin besteht, dass die erste Ladeschnittstelle mit dem ersten Batteriepack verbunden ist und das erste Batteriepack nicht vollständig geladen ist, und der Lastzustand der zweiten Ladeschnittstelle darin besteht, dass die zweite Ladeschnittstelle mit dem zweiten Batteriepack verbunden ist und das zweite Batteriepack nicht vollständig geladen ist, die Steuereinheit dafür ausgelegt ist, den zweiten Schalter und den dritten Schalter so zu steuern, dass sie eingeschaltet sind, und den ersten Schalter und den vierten Schalter so zu steuern, dass sie ausgeschaltet sind.

14. Ladegerät nach Anspruch 3, wobei der Lastzustand wenigstens den Ladezustand des ersten Batteriepacks oder des zweiten Batteriepacks umfasst.

15. Ladegerät nach Anspruch 14, welches ferner eine erste Kommunikationsschnittstelle (132) und eine zweite Kommunikationsschnittstelle (142) umfasst; wobei die erste Kommunikationsschnittstelle mit dem ersten Batteriepack verbunden ist, um wenigstens den Ladezustand des ersten Batteriepacks zu erfassen, und die zweite Kommunikationsschnittstelle mit dem zweiten Batteriepack verbunden ist, um wenigstens den Ladezustand des zweiten Batteriepacks zu erfassen.

## Revendications

1. Dispositif de chargement (100), comprenant :
une première interface de chargement (130) pouvant être reliée à un premier bloc de batteries pour charger le premier bloc de batteries ;
une seconde interface de chargement (140) pouvant être reliée à un second bloc de batteries pour charger le second bloc de batteries ;
un premier module de sortie de puissance (110) relié à la première interface de chargement pour charger le premier bloc de batteries ;
un second module de sortie de puissance (120) relié à la seconde interface de chargement pour charger le second bloc de batteries ; et
une commande (200) reliée à au moins la première interface de chargement et la seconde interface de chargement ; dans lequel la commande est configurée pour :
lorsque le premier bloc de batteries est complètement chargé ou n'est pas relié à la première interface de chargement, commander le premier module de sortie de puissance et le second module de sortie de puissance à être reliés électriquement à la seconde interface de chargement pour charger le second bloc de batteries ;
**caractérisé en ce que**
le premier bloc de batteries est un bloc de batteries d'un outil électrique et que le second bloc de batteries est un bloc de batteries d'un outil électrique.

2. Dispositif de chargement selon la revendication 1, dans lequel un premier commutateur (150) est couplé entre le premier module de sortie de puissance et la première interface de chargement, un deuxième commutateur (160) est couplé entre le premier module de sortie de puissance et la seconde interface de chargement, un troisième commutateur (170) est couplé entre le second module de sortie de puissance et la première interface de chargement, un quatrième commutateur (180) est couplé entre le second module de sortie de puissance et la seconde interface de chargement, et la commande est configurée pour commander le premier commutateur, le deuxième commutateur, le troisième commutateur et le quatrième commutateur à être mis en marche ou arrêtés.

3. Dispositif de chargement selon la revendication 1, comprenant en outre un premier dispositif de détection (131) pour déterminer un état de charge de la première interface de chargement et un second dispositif de détection (141) pour déterminer un état de charge de la seconde interface de chargement.

4. Dispositif de chargement selon la revendication 3, dans lequel l'état de charge de la première interface de chargement est utilisé pour indiquer si la première interface de chargement est reliée au premier bloc de batteries et un état de charge du premier bloc de batteries, et l'état de charge de la seconde interface de chargement est utilisé pour indiquer si la seconde interface de chargement est reliée au second bloc de batteries et un état de charge du second bloc de batteries.

5. Dispositif de chargement selon la revendication 4, dans lequel un premier commutateur (150) est couplé entre le premier module de sortie de puissance et la première interface de chargement, un deuxième commutateur (160) est couplé entre le premier module de sortie de puissance et la seconde interface de chargement, un troisième commutateur (170) est couplé entre le second module de sortie de puissance et la première interface de chargement, un quatrième commutateur (180) est couplé entre le second module de sortie de puissance et la seconde interface de chargement, et la commande est configurée pour commander le premier commutateur, le deuxième commutateur, le troisième commutateur et le quatrième commutateur à être mis en marche ou arrêtés en se basant sur l'état de charge de la première interface de chargement et l'état de charge de la seconde interface de chargement.

6. Dispositif de chargement selon la revendication 5, dans lequel la commande est configurée pour arrêter le premier commutateur et le troisième commutateur lorsque l'état de charge de la première interface de chargement déterminé par le premier dispositif de détection est que la première interface de chargement n'est pas reliée au premier bloc de batteries ou que le premier bloc de batteries est complètement chargé.

7. Dispositif de chargement selon la revendication 5, dans lequel la commande est configurée pour arrêter le deuxième commutateur et le quatrième commutateur lorsque l'état de charge de la seconde interface de chargement déterminé par le second dispositif de détection est que la seconde interface de chargement n'est pas reliée au second bloc de batteries ou que le second bloc de batteries est complètement chargé.

8. Dispositif de chargement selon la revendication 5, dans lequel lorsque l'état de charge de la première interface de chargement est que la première interface de chargement est reliée au premier bloc de batteries et que le premier bloc de batteries n'est pas complètement chargé, et que l'état de charge de la seconde interface de chargement est que la seconde interface de chargement n'est pas reliée au second bloc de batteries, la commande est configurée pour commander le premier commutateur et le troisième commutateur à être mis en marche et commander le deuxième commutateur et le quatrième commutateur à être arrêtés.

9. Dispositif de chargement selon la revendication 5, dans lequel lorsque l'état de charge de la première interface de chargement est que la première interface de chargement est reliée au premier bloc de batteries et que le premier bloc de batteries n'est pas complètement chargé, et que l'état de charge de la seconde interface de chargement est que la seconde interface de chargement est reliée au second bloc de batteries et que le second bloc de batteries est complètement chargé, la commande est configurée pour commander le premier commutateur et le troisième commutateur à être mis en marche et commander le deuxième commutateur et le quatrième commutateur à être arrêtés.

10. Dispositif de chargement selon la revendication 5, dans lequel lorsque l'état de charge de la première interface de chargement est que la première interface de chargement n'est pas reliée au premier bloc de batteries et que l'état de charge de la deuxième interface de chargement est que la deuxième interface de chargement n'est pas reliée au second bloc de batteries, la commande est configurée pour commander le premier commutateur, le deuxième commutateur, le troisième et le quatrième commutateur à être arrêtés.

11. Dispositif de chargement selon la revendication 5, dans lequel lorsque l'état de charge de la première interface de chargement est que la première interface de chargement est reliée au premier bloc de batteries et que le premier bloc de batteries est complètement chargé, et que l'état de charge de la deuxième interface de chargement est que la deuxième interface de chargement est reliée au second bloc de batteries et que le second bloc de batteries est complètement chargé, la commande est configurée pour commander le premier commutateur, le deuxième commutateur, le troisième commutateur et le quatrième commutateur à être arrêtés.

12. Dispositif de chargement selon la revendication 5, dans lequel lorsque l'état de charge de la première interface de chargement est que la première interface de chargement est reliée au premier bloc de batteries et que le premier bloc de batteries n'est pas complètement chargé, et que l'état de charge de la deuxième interface de chargement est que la deuxième interface de chargement est reliée au second bloc de batteries et que le second bloc de batteries n'est pas complètement chargé, la commande est configurée pour commander le premier commutateur et le quatrième commutateur à être mis en marche, et commander le deuxième commutateur et le troisième commutateur à être arrêtés.

13. Dispositif de chargement selon la revendication 5, dans lequel lorsque l'état de charge de la première interface de chargement est que la première interface de chargement est reliée au premier bloc de batteries et que le premier bloc de batteries n'est pas complètement chargé, et que l'état de charge de la deuxième interface de chargement est que la deuxième interface de chargement est reliée au second bloc de batteries et que le second bloc de batteries n'est pas complètement chargé, la commande est configurée pour commander le deuxième commutateur et le troisième commutateur à être mis en marche, et commander le premier commutateur et le quatrième commutateur à être arrêtés.

14. Dispositif de chargement selon la revendication 3, dans lequel l'état de charge comprend au moins l'état de charge du premier bloc de batteries ou du second bloc de batteries.

15. Dispositif de chargement selon la revendication 14, comprenant en outre une première interface de communication (132) et une seconde interface de communication (142) ; dans lequel la première interface de communication est reliée au premier bloc de batteries pour acquérir au moins l'état de charge du premier bloc de batteries et la seconde interface de communication est reliée au second bloc de batteries pour acquérir au moins l'état de charge du second bloc de batteries.
